# EUROPÄISCHE PATENTSCHRIFT

(11) **EP 2 003 013 B1**
(45) Veröffentlichungstag und Bekanntmachung des Hinweises auf die Patenterteilung: **03.04.2013**
(21) Anmeldenummer: 08001470.7
(22) Anmeldetag: 26.01.2008
(51) Int. Cl.: B60N 2/08

(54) **Verriegelungsvorrichtung für ein Schienenverstellsystem**
Locking device for a rail adjustment system
Dispositif de verrouillage pour un système de réglage de rails

(30) Priorität: 14.06.2007 DE 102007027321
(43) Veröffentlichungstag der Anmeldung: 17.12.2008
(73) Patentinhaber: Brose Fahrzeugteile GmbH & Co. Kommanditgesellschaft Coburg, 96450 Coburg (DE)
(72) Erfinder: Kostin, Sergej, 96450 Coburg (DE)
(74) Vertreter: FDST Patentanwälte

(56) Entgegenhaltungen:
- DE-A1- 19 918 622
- DE-C1- 10 041 605
- GB-A- 2 253 999
- US-A1- 2003 006 355

## Beschreibung

Die Erfindung betrifft eine Verriegelungsvorrichtung für ein Schienenverstellsystem gemäß dem Oberbegriff des Anspruchs 1, weiterhin ein Schienenversteilsystem mit einer solchen Vorrichtung, und ferner einen Fahrzeugsitz eines Kraftfahrzeugs mit einem derartigen Schienenverstellsystem.

Ein Schienenverstellsystem für einen Fahrzeugsitz umfasst üblicherweise eine fahrzeugfest montierte Unterschiene und eine mit dem Fahrzeugsitz verbundene, gegen die Unterschiene linearverstellbar gelagerte Oberschiene. Damit ist der Fahrzeugsitz in der Fahrzeuglängsrichtung positionierbar. Dem Schienenverstellsystem ist eine Verriegelungsvorrichtung zugeordnet, durch welche in einer gewünschten Längsposition des Fahrzeugsitzes die Oberschiene an die Unterschiebe arretiert wird.

An die Verriegelungsvorrichtung ist die Forderung gestellt, den Fahrzeugsitz in einer eingestellten Längsposition zu sichern, insbesondere bei extremen Krafteinwirkungen, wie sie in einer Crashsituation eintreten können. Zugleich ist erwünscht, dass die Verriegelungsvorrichtung ergonomisch sowie insbesondere einfach und ohne größeren Kraftaufwand betätigbar ist.

Eine aus der DE 203 13 951 U1 bekannte Verriegelungsvorrichtung umfasst mehrere hintereinander angeordnete und vertikal versenkbare Verriegelungsbolzen, sowie ein Hebelelement, welches um eine horizontale Schwenkachse parallel zur Anordnungsrichtung der Verriegelungsbolzen schwenkbar gelagert ist. ZurEntriegelung hintergreift das Hebelelement mit gabelförmigen Fortsätze die Verriegelungsbolzen endseitig in Entriegelungsrichtung. Die Verriegelungsvorrichtung ist auf der Oberschiene eines Schienenverstellsystems der eingangs genannten Art montiert, wobei die Unterschiene ein Lochraster mit zueinander beabstandeten Rastöffnungen zur Aufnahme der Verriegelungsbolzen aufweist. Die Verriegelungsbolzen sind umfangsseitig mit Federelementen versehen. Diese Federelemente drücken die Verriegelungsbolzen in Verriegelungsrichtung, werden bei einer Entriegelung durch das Hebelelement komprimiert und bilden dadurch eine Rückstellkraft aus.

Der Abstand der Rastöffnungen auf dem Lochraster der Unterschiene weicht von dem Abstand der Verriegelungsbolzen der Verriegelungsvorrichtung ab, so dass im arretierten Zustand des Schienenverstellsystems nicht alle Verriegelungsbolzen vollständig versenkt sind, sondern zumindest einer der Verriegelungsbolzen in vorgespanntem Zustand zwischen zwei Rastöffnungen auf der Unterschiene steht. Bei einer hohen Beschleunigung - etwa durch eine Crashsituation verursacht - wird der Fahrzeugsitz durch die Massenträgheit versetzt, so dass die versenkten Verriegelungsbolzen einen Teil der Trägheitskraft des Fahrzeugsitzes aufnehmen und in Verformungskräfte umwandeln. Die Oberschiene wird dabei gegenüber der Unterschiene verschoben. Dabei rutscht der vorgespannte Verriegelungsbolzen kurzzeitig über die nächst freie Rastöffnung in Bewegungsrichtung und wird durch die Federkraft des Federelementes versenkt, womit der Verriegelungsbolzen als zusätzliche Hintersicherung aktiviert ist.

Das Hebelelement der bekannten Verriegelungsvorrichtung weist eine Fläche auf, die bezüglich der Schwenkachse gegenüberliegend zu den gabelförmigen Fortsätzen angeordnet ist und die zur Krafteinleitung durch weitere Mittel ausgebildet ist. Zur Entriegelung der Verriegelungsbolzen wird dabei die Fläche in Vemegelungsrichtung gedrückt. Die Größe und Ausformung der Fläche ist dadurch bestimmt, die an dem Krafteinleitungspunkt der Fläche zur Entriegelung der Verriegelungsbolzen aufzubringende Kraft gemäß der Hebelgesetze zu vermindern. Je länger der Hebelarm auf der Seite der Fläche zur Schwenkachse ist, desto proportional geringer fällt die aufzubringende Entriegelungskraft aus.

Weiter ist aus der US 2003/006355 A1 eine Verriegelungsvorrichtung der eingangs genannten Art bekannt, wobei die Verriegelungsbolzen durch eine Krafteinwirkung auf eine Stellfläche des Hebelelements in Entriegelungsrichtung entriegelt werden. Zur Betätigung ist hierbei eine Hebelstange vorgesehen. Eine ähnliche Vorrichtung wird in der GB 2 253 999 A vorgeschlagen. Dort wird über einen Hebelarm zur Entriegelung der Verriegelungsbolzen unmittelbar über eine Betätigungsvorrichtung in Entriegelungsrichtung angehoben.

Weiter ist aus der DE 199 18 622 A1 eine Verriegelungsvorrichtung für ein Schienenverstellsystem eines Fahrzeugsitzes bekannt, wobei zur Entriegelung eine quer bewegliche Kulisse mittels eines starren horizontalen Gestänges verschoben wird. Über die Kulisse wird eine Betätigungsstange nach Art einer Kurbelwelle angetrieben, deren gekrümmte Enden auf die Verriegelungsbolzen wirken.

Schließlich ist aus der DE 100 41 605 C1 eine Verriegelungsvorrichtung für ein Schienenverstellsystem entnehmbar, wobei ein Hebelelement in Entriegelungsrichtung auf eine Führung wirkt, die mit einer Verriegelungsplatte mit einer Gegenverzahnung wechselwirkt.

Die Fläche des Hebelelementes und die weiteren Mittel, die zur Krafteinleitung auf die Fläche ausgebildet sind, sind insgesamt raumintensiv. Bei einer sitzunterseitigen Anordnung der Verriegelungsvorrichtung greifen die Flächen in den Bereich zwischen die Sitzschienen, wodurch der Bauraum und die Designfreiheit für die Ausgestaltung der unterseitigen Sitzgeometrie eingeschränkt sein kann.

Der Erfindung liegt die Aufgabe zugrunde, eine Verriegelungsvorrichtung für ein Schienenverstellsystem eines Fahrzeugsitzes anzugeben, welche als möglichst kompakte Baugruppe ausgebildet ist und welche möglicht platzsparend mit dem Schienenverstellsystem verbunden ist. Des Weiteren soll ein Schienenverstellsystem angegeben werden, welches möglichst raumsparend ausgebildet ist. Ferner soll ein Fahrzeugsitz angegeben, welcher hinsichtlich der Ausgestaltung der Sitzgeometrie möglichst verbessert und kostengünstig ist.

Die erste Aufgabe wird erfindungsgemäß durch die Merkmale des Anspruchs 1 gelöst. Danach wird eine Verriegelungsvorrichtung für ein Schienenverstellsystem eines Fahrzeugsitzes mit zumindest einem Verriegelungsbolzen und mit einem um eine Schwenkachse schwenkbaren Hebelelement zur Entriegelung des Verriegelungsbolzens angegeben. Die Verriegelungsvorrichtung ist dadurch gekennzeichnet, dass der oder jeder Verriegelungsbolzen durch eine Krafteinwirkung auf eine Stellfläche des Hebelelements in Entriegelungsrichtung entriegelbar ist.

Die Erfindung geht von der Überlegung aus, den Raumanspruch der Verriegelungsvorrichtung im Wesentlichen dadurch vermindern zu können, indem auf die Ausbildung einer raumgreifenden Fläche des Hebelelementes zur betätigenden Krafteinleitung gegenüberliegend zu den Verriegelungsbolzen bezüglich der Schwenkachse ganz verzichtet wird. Dies kann dadurch erreicht werden, dass sich die Schwenkachse im seitlichen Randbereich des Hebelelementes befindet. Die Flächenelemente des Hebelelementes, welche zur Krafteinleitung und Kraftübertragung dienen, sind dann auf ein und der selben Seite bezüglich der Schwenkachse ausgebildet. Insbesondere ist damit die zur betätigenden Krafteinleitung auf das Hebelelement eingerichtete Stellfläche bezüglich der Schwenkachse seitengleich zum Verriegelungsbolzen angeordnet. Eine Entriegelungsbewegung sowie eine Verriegelungsbewegung impliziert demzufolge stets eine gleichgerichtete Krafteinleitung auf die Stellfläche in Ent- bzw. in Verrieglungsrichtung.

Eine Krafteinwirkung in Entriegelungsrichtung auf die Stellfläche bewirkt daher eine entriegelnde Schwenkbewegung des Hebelelementes bei möglichst geringem Bauvolumen der Verriegelungsvorrichtung. Dieses Anordnungsprinzip erlaubt somit die Ausbildung der Verriegelungsvorrichtung als kompakte Baugruppe, deren Raumbedarf im Wesentlichen auf eine relativ nahe Umgebung um die Schienen des Schienenverstellsystems beschränkt ist, welchem die Verriegelungsvorrichtung zugeordnet ist.

Dazu ist ein auf die Stellfläche des Hebelelements wirkender Entriegelungsstift ausgebildet, der von einer Exzenterfläche in Entriegelungsrichtung des Verriegelungsbolzens betätigbar ist. Der Entriegelungsstift führt hierbei eine lineare Bewegung aus und dient als mechanisches Verbindungselement zwischen der Exzenterfläche und der Stellfläche, wobei die Entriegelungsbewegung durch eine Bewegung der Exzenterfläche eingeleitet wird.

Insbesondere ist in einer solchen Anordnung der Entriegelungsstift parallel zu dem Verriegelungsbolzen angeordnet, vorzugsweise im Wesentlichen positionsgleich zu dem Verriegelungsbolzen bezüglich der zur Entriegelungsrichtung und zur Schwenkachse orthogonalen Richtung. Die Ausdehnung der Verriegelungsvorrichtung entlang dieser Richtung bleibt damit im Wesentlichen auf den Bereich zwischen dem Verriegelungsbolzen und dem Schnittpunkt mit der Schwenkachse beschränkt, wodurch die Verriegelungsvorrichtung eine besonders kompakte, raumsparende Form annehmen kann.

Zweckmäßigerweise liegt der Entriegelungsstift endseitig auf der Exzenterfläche auf und gegenüberliegend endseitig an der Stellfläche an. Damit fungiert der Entriegelungsstift als unmittelbares mechanisches Verbindungselement von der Exzenterfläche zur Stellfläche. Der Entriegelungsstift stellt das einzige Verbinelement zwischen der Exenterfläche und der Stellfläche her, so dass praktischerweise auf weitere mechanische Koppelungskomponenten verzichtet werden kann.

Weiterhin ist günstigerweise die Stellfläche von einer Schablone zur endseitigen Führung des Entriegelungsstiftes eingefasst. Die Schablone kann beispielsweise durch ein mit einer Clipverbindung auf die Stellfläche aufsetzbares Flächengebilde vorgegeben sein. Dieses weist eine Falz auf, mit der die Stellfläche rückseitig hintergriffen wird. Zudem weist dieses eine mittige Aussparung auf, wobei die Aussparungsfläche die Gesamtheit der Berührpunkte im Zuge der Schwenkbewegung des Entriegelungsstiftes mit der Stellfläche umfasst, so dass die Randfläche der Aussparung eine den Entriegelungsstift führende und sichernde Kontur ausbildet.

Die Exzenterfläche ist geeigneterweise an einem Drehelement ausgebildet, und der Entriegelungsstift ist durch eine Drehbewegung des Drehelementes von der Exzenterfläche betätigbar. Somit ist durch die Exzenterfläche die Drehbewegung des Drehelementes in die Linearbewegung des Entriegelungsstiftes übersetzt. Damit hängt der Abstand der Exzenterfläche zur Drehachse des Drehelementes von dem Drehwinkel des Drehelements ab. Vorzugsweise ist die Exzenterfläche in Richtung der Drehachse korrespondierend zur Endseite des Entriegelungsstiftes geformt und in Drehrichtung mit monoton veränderlichem Radius zur Drehachse gekrümmt. Dadurch wird bei einer Drehbewegung des Drehelementes der Entriegelungsstift gleichmäßig in die Entriegelungsrichtung oder Verriegelungsrichtung bewegt. Hierzu kann in einer speziellen Ausgestaltung die Exzenterfläche schneckenförmig abgekröpft sein, so dass bei einer Drehung des Drehelementes um etwa 180° die Auflagefläche des Entriegelungsstiftes von der Innenseite der Schneckenfläche über die Abkröpfung auf die Außenseite geführt wird, oder umgekehrt, wobei der Entriegelungsstift in die Entriegelungsrichtung geführt bzw. in die Verriegelungsrichtung abgesenkt wird.

Zweckdienlicherweise ist das Drehelement als ein einstückiges Kunststoffteil ausgebildet. Damit sind unterschiedliche und insbesondere auch komplexe Flächengeometrien für die Exzenterfläche einfach herstellbar, was für eine Herstellung in großen Stückzahlen besonders kostengünstig ist.

Da das Drehelement in der Verlängerungsrichtung des Entriegelungsstiftes liegt, ist insbesondere das Drehelement bezüglich der Drehachse im Wesentlichen positionsgleich zu den Verriegelungsbolzen angeordnet.

Vorzugsweise ist das Drehelement endseitig mit einer horizontal und orthogonal zur Schwenkachse angeordneten Anlenkwelle verbunden. Die Drehachse der Anlenkwelle definiert damit die Drehachse des Drehelementes. Über die Anlenkwelle wird das Drehelement gedreht und dadurch der Entriegelungsstift zur Entriegelung oder Verriegelung der Verriegelungsvorrichtung betätigt.

Insbesondere ist das Drehelement auf einem Teilabschnitt der Drehachse im Wesentlichen hohlzylindrisch ausgebildet, so dass es endseitig formschlüssig auf die Anlenkwelle aufsteckbar ist. Vorzugsweise ist das Drehelement mit Rastelementen versehen zur Ausbildung einer Clipverbindung mit der Anlenkwelle.

Damit die Anlenkwelle endseitig stabil gehalten ist, ist bevorzugterweise das Drehelement an der der Anlenkwelle abgewandten Endseite bezüglich der Drehachse drehbar an einem mit dem Schienenverstellsystem verbundenen Haltewinkel gelagert. Der Haltewinkel ist dazu ausgebildet, über das Drehelement die Verbindung der Anlenkwelle zum Schienenverstellsystem herzustellen, wenn funktions- oder konstruktionsbedingt das Drehelement nicht unmittelbar an dem Schienenverstellsystem drehbar gelagert werden kann.

In einer bevorzugten Ausführungsvariante der Verriegelungsvorrichtung ist eine Abstützplatte vorgesehen, an welche das Hebelelement schwenkbar angelenkt ist, und welche Bohrungen für jeden Verriegelungsbolzen und für den Entriegelungsstift aufweist. Über diese Abstützplatte ist die Verbindung des Hebelelementes mit der Oberschiene eines Schienenverstellsystem hergestellt, indem zweckmäßigerweise die Abstützplatte oberseitig auf der Oberschiene aufliegt. Die Oberschiene weist den Bohrungen der Abstützplatte entsprechende Bohrungen auf, so dass im montierten Zustand der Verriegelungsvorrichtung die einander entsprechenden Bohrungen miteinander fluchten. Somit durchlaufen der Verriegelungsbolzen und der Entriegelungsstift in der Entriegelungsrichtung die Oberschiene und die Abstützplatte aufeinanderfolgend, entsprechend entgegengesetzt in der Entriegelungsrichtung.

Zur Anlenkung des Hebelelementes an die Abstützplatte ist günstigerweise ein zur Schwenkachse koaxialer Schwenkstift ausgebildet, mit welchem das Hebelelement verbunden ist, und welcher beidendseitig in jeweils einer Bohrung in einer Seitenfläche der Abstützplatte gelagert ist. Dabei liegen die Seitenflächen im Wesentlichen in einer zur Schwenkachse orthogonalen Ebene.

Zweckmäßigerweise ist die Abstützplatte zur verbesserten Abstützung auf der Oberschiene in Form eines Winkelelementes ausgebildet. Ferner ist die Abstützplatte günstigerweise mit einem ergänzenden Haltemittel zur Fixierung an die Oberschiene versehen.

Die mit der Erfindung erzielten Vorteile bestehen insbesondere darin, dass eine Verriegelungsvorrichtung, bei der die Verriegelungsbolzen durch eine Krafteinwirkung auf eine Stellfläche eines Hebelelements in Entriegelungsrichtung entriegelbar sind, besonders raumsparend aufgebaut ist. Die Verriegelungsvorrichtung ist daher besonders geeignet für ein Schienenverstellsystem eines Fahrzeugsitzes, bei der die Anlenkwelle von einem Ringelement zur Anbindung an ein Betätigungselement eingefasst ist, insbesondere mittels eines mit dem Ringelement peripher verbundenen Seilzugs. Das Ringelement übernimmt damit die Funktion einer Seiltrolle für eine Drehbewegung von 180°. Durch die Formgebung des Ringelementes ist die zur Entriegelung aufzuwendende Kraft flexibel vorgebbar, da diese Kraft umgekehrt proportional zum Abstand des Angriffspunktes von der Längsachse der Anlenkwelle ist.

Nachfolgend wird ein Ausführungsbeispiel der Erfindung anhand einer Zeichnung erläutert. Darin zeigen:
- Fig. 1: in perspektivischer Darstellung eine mit einer Anlenkwelle verbundene Verriegelungsvorrichtung in entriegeltem Zustand,
- Fig. 2: die mit der Anlenkwelle verbundene Verriegelungsvorrichtung gemäß Fig. 1 in verriegeltem Zustand,
- Fig. 3: die Verriegelungsvorrichtung in entriegeltem Zustand im Längsschnitt,
- Fig. 4: die Verriegelungsvorrichtung in verriegeltem Zustand im Längsschnitt,
- Fig. 5: die mit der Anlenkwelle verbundene und an einem Schienenverstellsystem montierte Verriegelungsvorrichtung gemäß Fig. 1 in entriegeltem Zustand, und
- Fig. 6: die mit der Anlenkwelle verbundene und an einem Schienenverstellsystem montierte Verriegelungsvorrichtung in verriegeltem Zustand.

Einander entsprechende Teile sind in allen Figuren mit den gleichen Bezugszeichen versehen.

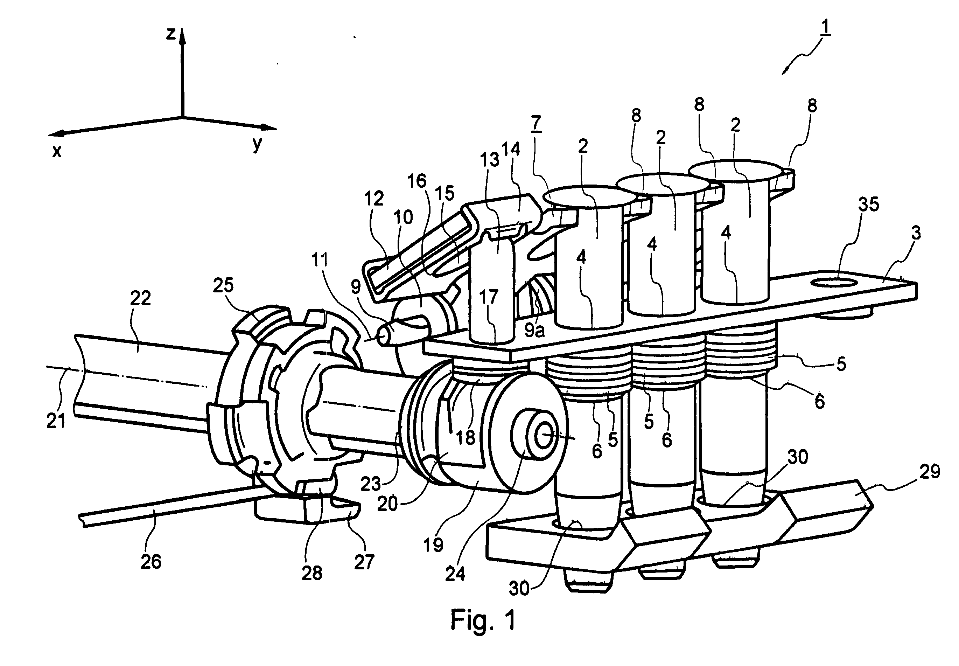

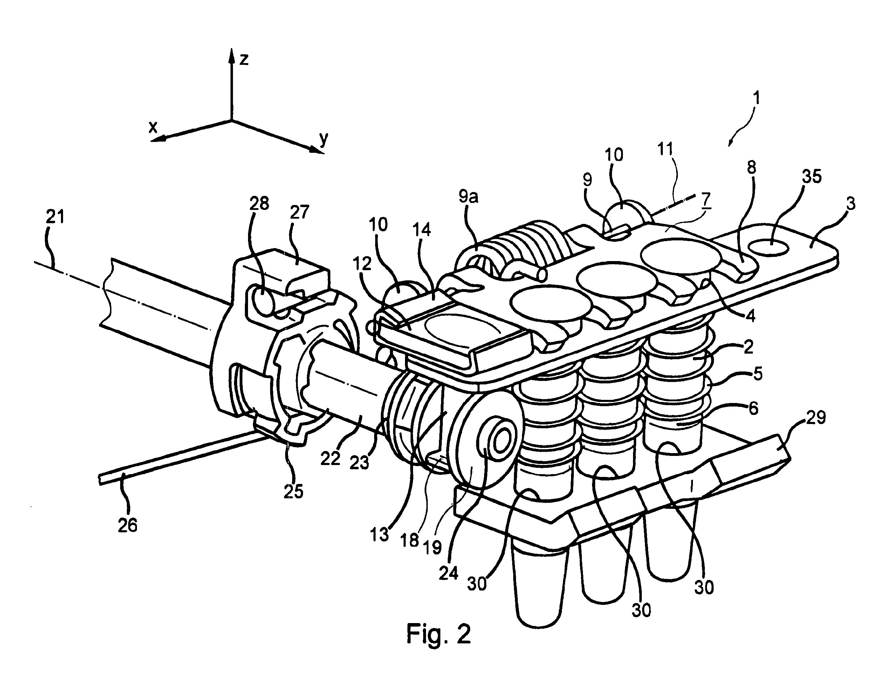

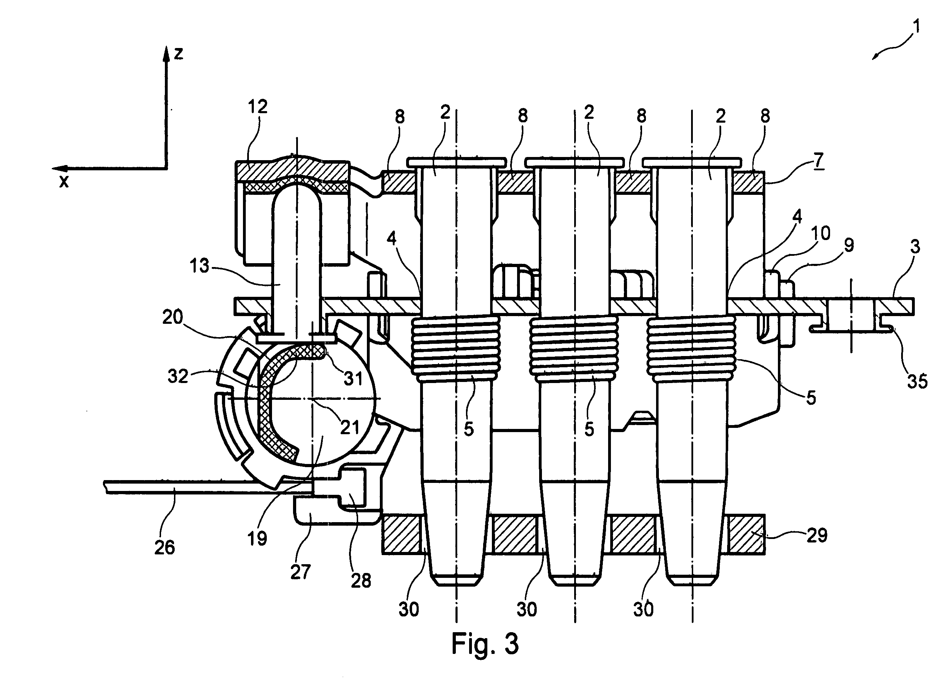

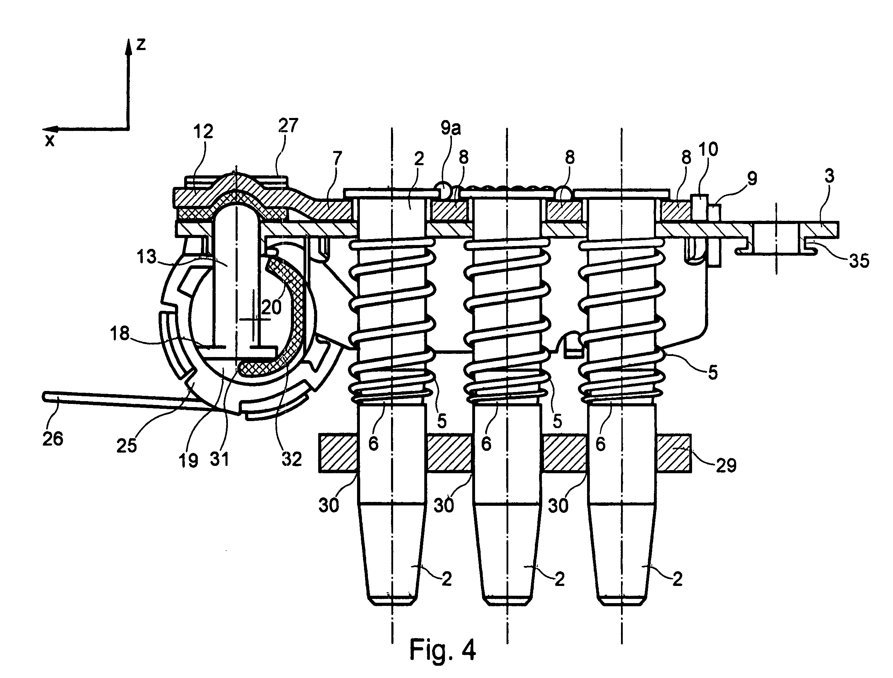

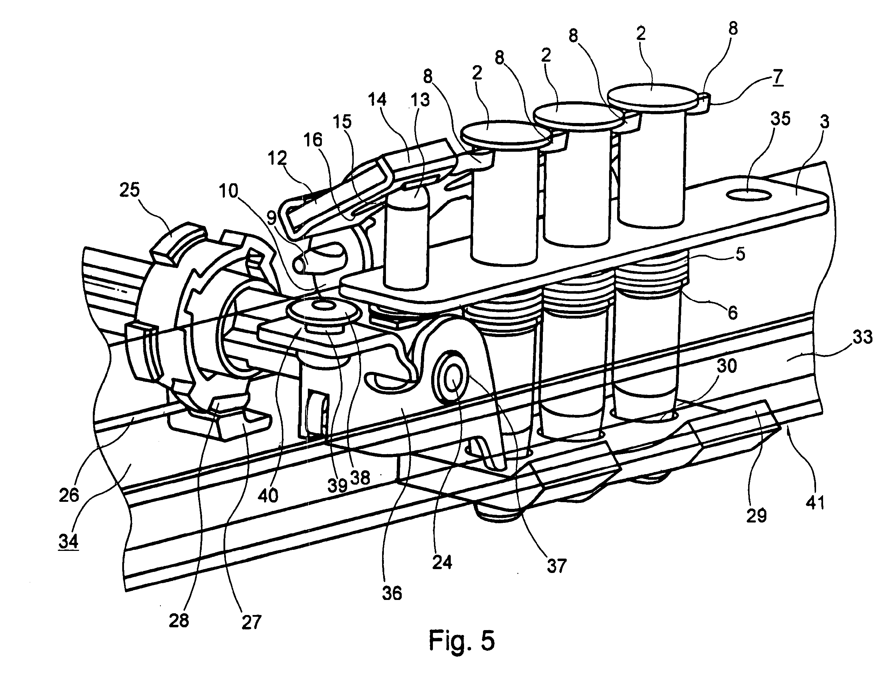

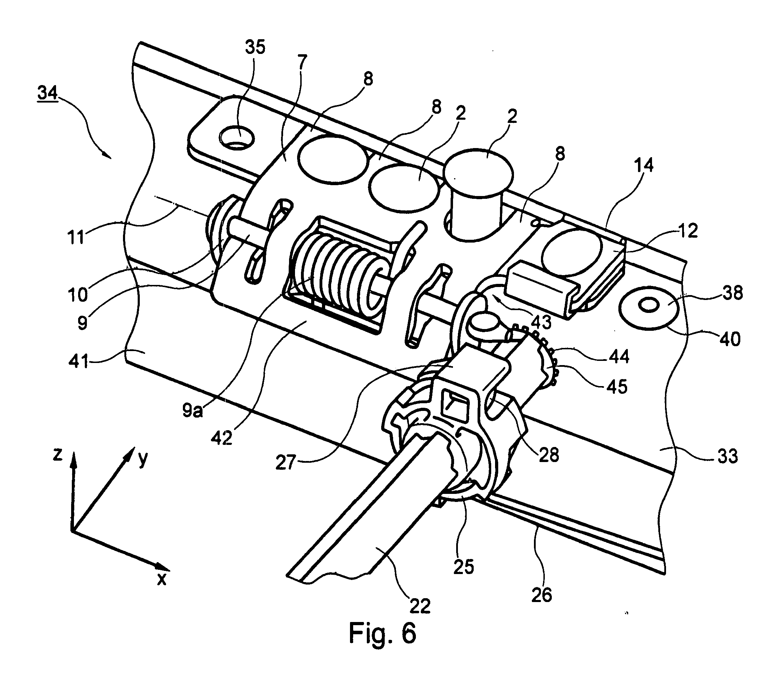

In den Figuren 1 und 2 ist die Verriegelungsvorrichtung 1 in einer seitlich perspektivischen Ansicht in entriegeltem bzw. in verriegeltem Zustand dargestellt. Die Verriegelungsvorrichtung 1 umfasst drei hintereinander angeordnete Verriegelungsbolzen 2, die in vertikaler Richtung (inverse z-Richtung) aus einer entriegelten Position (Fig. 1) in eine verriegelte Position (Fig. 2) versenkbar sind. Die Verriegelungsbolzen 2 durchlaufen eine Abstützplatte 3 und die Oberschiene eines Schienenverstellsystems, auf der die Abstützplatte 3 aufliegt (vgl. Fig. 5, 6), in dafür ausgebildete Bohrungen 4. Durch vorspannbare Federelemente 5, die die Verriegelungsbolzen 2 umgreifen und oberendseitig an der Abstützplatte 3 anliegen (vgl. Fig. 3, 4) sowie unterendseitig in einer Nut 6 jeweils eines Verriegelungsbolzens 2 verklemmt sind, wird auf die Verriegelungsbolzen 2 eine Rückstellkraft in die Verriegelungsrichtung (inverse z-Richtung) aufgebaut.

Weiterhin ist ein an die Abstützplatte 3 schwenkbar angelenktes Hebelelement 7 dazu ausgebildet, mit gabelförmigen, die Verriegelungsbolzen 2 oberendseitig hintergreifenden Fortsätzen 8 gegen die Rückstellkraft der Federelemente 5 die Verriegelungsbolzen 2 aus der verriegelten Position (Fig. 2) in die entriegelte Position (Fig. 1), also in Entriegelungsrichtung (z-Richtung) anzuheben. Das Hebelelement 7 ist über einen entlang der x-Richtung ausgebildeten Schwenkstift 9 an der Abstützplatte 3 angelenkt. Dabei ist der Schwenkstift 9 in Flächenelementen 10 der Abstützplatte 3 endseitig gelagert, die parallel zur yz-Ebene ausgebildet sind. Die Schwenkachse 11 des Hebelelementes 7 ist somit parallel zur x-Richtung.

Dem Hebelelement 7 ist koflächig zu den gabelförmigen Fortsätzen 8 eine Stellfläche 12 beigeordnet, die durch einen vertikalen Entriegelungsstift 13 in Entriegelungsrichtung (z-Richtung) betätigbar ist. Der Entriegelungsstift 13 übt dabei eine Kraft auf die Stellfläche 12 aus, die größer ist als alle das Hebelelement 7 in Verriegelungsrichtung (inverse z-Richtung) treibenden Kräfte, insbesondere größer als die Summe der durch die Federelemente 5 vertikalpositionsabhängig induzierten Rückstellkräfte.

Die Wirkung der Federmittel 5 als Verriegelungsaktoren wird durch die Federkraft einer den Schwenkstift 9 konzentrisch umlaufenden Schraubenspiralfeder 9a ergänzt. Während die Federmittel 5 dazu ausgebildet sind, jeweils eine ausreichend große den korrespondierenden Verriegelungsbolzen 2 in Verriegelungsrichtung (inverse z-Richtung) zu treibende Kraft auszubilden, wirkt die Schraubenspiralfeder 9a auf das Hebelelement 7, indem die Schraubenspiralfeder 9a durch eine Verklemmung gegen das Hebelelement 7 und die Abstützplatte 3 eine winkelabhängige Rückstellkraft zwischen dem Hebelelement 7 und der Abstützplatte 3 induziert. Durch diese Entkopplung der Federwirkungen in der Verriegelungsvorrichtung 1 können die jeweiligen Federmittel 5 und 9a für die Verriegelungsbolzen 2 bzw. für das Hebelelement 7 unabhängig voneinander gewählt werden.

Die Position des Entriegelungsstiftes 13 bezüglich der y-Richtung ist im Wesentlichen gleich den Positionen der Verriegelungsbolzen 2 bezüglich der y-Richtung.

Damit findet insbesondere die Krafteinleitung in Entriegelungsrichtung (z-Richtung) auf das Hebelelement 7 bezüglich der y-Richtung seitengleich zur Schwenkachse 11 statt wie die Krafteinleitung der in Verriegelungsrichtung (inverse z-Richtung) auf das Hebelelement 7 wirkenden Kräfte. Dies erlaubt eine wenig raumintensive Ausbildung des Hebelelementes 7 im Vergleich zu einer Ausführung, bei welcher bezüglich der y-Richtung die Krafteinleitungspunkte für die Ver- und Entriegelung sich gegenüberliegend zur Schwenkachse 11 positioniert sind.

Der Entriegelungsstift 13 liegt oberendseitig unmittelbar an der Stellfläche 12 an, wobei die Stellfläche 12 durch eine diese hintergreifende Schablone 14 mit einer zentralen Ausnehmung 15 eingefasst ist. Die Randfläche 16 der zentralen Ausnehmung 15 führt und sichert den Entriegelungsstift 13 im Zuge der Schwenkbewegung des Hebelelementes 7 um die Schwenkachse 11. Der Entriegelungsstift 13 durchläuft die Abstützplatte 3 und die Oberschiene des Schienenverstellsystems in einer dafür eingerichteten Bohrung 17. An der unteren Endseite des Entriegelungsstiftes 13 ist eine verbreiterte Auflagefläche 18 ausgebildet, über die der Entriegelungsstift 13 auf einer in einem Drehelement 19 eingeformten Exzenterfläche 20 steht.

Wie die Abstützplatte 3 bildet das Drehelement 19 eine mechanische Schnittstelle der Verriegelungsvorrichtung 1 zum Schienenverstellsystem aus. Das Drehelement 19 ist um eine Drehachse 21 um im Wesentlichen 180° schwenkbar gelagert, wobei die Drehachse 21 parallel zur y-Richtung liegt. Durch die Formgebung der Exzenterfläche 20 wird bei einer Schwenkbewegung des Drehelementes 19 der aufliegende Entriegelungsstift 13 in Verriegelungsrichtung (inverse z-Richtung) geführt oder in die Entriegelungswirkung aufbringend in die Entriegelungsrichtung (z-Richtung) gedrückt (vgl. Fig. 3, 4).

Das Drehelement 19 ist endseitig mit einer Anlenkwelle 22 verbunden, deren Längsachse koaxial zur Drehachse 21 liegt. Hierzu bildet das Drehelement 19 einen Steckring 23 aus, mit dem das Drehelement 19 die Anlenkwelle 22 formschlüssig umgreift. Auf der gegenüberliegenden Endseite bildet das Drehelement 19 einen hohlzylindrischen Fortsatz 24 aus, über welchen das Drehelement 19 an einem mit dem Schienenverstellsystem fest verbundenen Haltemittel drehbar gelagert ist und die Anlenkwelle 22 endseitig abstützt.

Die Anlenkwelle 22 ist von einem Ringelement 25 formschlüssig umgriffen, welches zur Führung eines Seilzugs 26 ausgebildet ist. Durch den Abstand des auf das Ringelement 25 endseitig aufwickelbaren Seilzugs 26 von der Drehachse 21 ist die für eine Entriegelung aufzuwendende Kraft definiert. Je größer der Abstand ist, desto kleiner ist diese aufzuwendende Kraft. Dem Ringelement 25 ist außenseitig eine Klemmlasche 27 angeformt, die eine verdickte Endseite 28 des Seilzugs 26 durch Klemmung festhält. Die andere Endseite des Seilzugs 26 ist mit einem Betätigungselement verbunden.

Durch eine über das Betätigungselement ausgeübte Zugwirkung auf den Seilzug 26 aus der in Fig. 2 dargestellten Konfiguration wird das Ringelement 25, die Anlenkwelle 22 und damit das Drehelement 19 um 180° gedreht. Dadurch wird der Entriegelungsstift 19 auf der Exzenterfläche 20 angehoben und drückt über die Stellfläche 12 das Hebelelement 7 gegen die in Verriegelungsrichtung (inverse z-Richtung) wirkenden Rückstellkräfte der Federelemente 5 und der Schraubenspiralfeder 9a in Entriegelungsrichtung (z-Richtung) und hebt mit dem Hebelelement 7 die Verriegelungsbolzen 2 an, bis die in Fig. 1 dargestellte Konfiguration erreicht ist. Wird die Zugwirkung aufgehoben, so üben die Rückstellkräfte der Federelemente 5 und der Schraubenspiralfeder 9a eine reversible Bewegung aus, bis die in Fig. 2 dargestellte Konfiguration erreicht ist.

Weiterhin sichtbar in den Darstellungen von Fig. 1 und Fig. 2 ist ein Knautschblock 29 aus einem plastisch verformbaren Material, der mit der Oberschiene des Schienenverstellsystems kantenseitig verbunden ist und den die Verriegelungsbolzen 2 in Bohrungen 30 durchlaufen, bis sie in dafür ausgebildete (nicht sichtbare) Rastlöcher oder -öffnungen in der Unterschiene des Schienenverstellsystems greifen. Dieser Stützblock 29 ist der Verriegelungsvorrichtung 1 zugeordnet und nimmt in einem Crashfall einen Teil der ausgelösten Trägheitskräfte auf.

In analoger Weise zu den Darstellungen in den Figuren 1 und 2 ist in den Figuren 3 und 4 die Verriegelungsvorrichtung 1 in entriegeltem bzw. in verriegeltem Zustand im Längsschnitt entlang der x-Richtung dargestellt, so dass die Bildebene planparallel zur xz-Ebene liegt. Die y-Richtung zeigt senkrecht aus der Bildebene heraus. Vergleichsweise deutlich sichtbar sind die die Verriegelungsbolzen 2 jeweils umschließenden Federelemente 5, die oberendseitig an der Abstützplatte 3 anliegen. Der Durchmesser der Bohrungen 4 ist daher gerade hinreichend groß, um den jeweiligen Verriegelungsbolzen 2 passieren zu lassen, damit noch eine hinreichend breite Auflagefläche für die Federelemente 5 gebildet ist. Der Durchmesser der den Bohrungen 4 korrespondierenden Bohrungen in der Oberschiene des Schienenverstellsystems, auf der die Abstützplatte 3 aufliegt und die in den Darstellungen von Fig. 1 bis Fig. 4 nicht sichtbar ist, ist somit mindestens so groß wie der Durchmesser der Federelemente 5 in der xy-Ebene. Unterendseitig sind die Federelemente 5 mit der in dem jeweiligen Verriegelungsbolzen 2 ausgebildeten Nut 6 verklemmt, wie in Fig. 4 erkennbar ist.

Während die Abstützplatte 3, die Drehachse 21 und der Knautschblock 29 jeweils eine konstante Lage bezüglich der z-Richtung aufweisen, ist die Lage des Hebelelementes 7 mit den gabelförmigen Fortsätzen 8 und mit der Stellfläche 12 bezüglich der z-Richtung unterschiedlich, entsprechend der Entriegelungsposition (Fig. 3) und der Verriegelungsposition (Fig. 4). Die Verriegelungsbolzen 2, die durch die gabelförmigen Fortsätze 8 hintergriffen sind, weisen eine entsprechend variable Vertikalposition auf.

Während in der Gleichgewichtskonfiguration in Fig. 4 die inneren Kräfte im System minimal sind, ist die Gleichgewichtslage in Fig. 3 durch den Entriegelungsstift 13 gegen die Rückstellkräfte der vorgespannten Federelemente 5 aufrechterhalten. Der Entriegelungsstift 13 stützt sich über die Auflagefläche 18 auf der Exzenterfläche 20 des Drehelementes 19 ab und der Entriegelungsstift 13 wirkt in Entriegelungsrichtung (z-Richtung) auf die Stellfläche 12 des Hebelelementes 7.

Vergleichsweise deutlich erkennbar ist die schneckenförmige Ausbildung der Exzenterfläche 20, die eine Abkröpfung 31 ausbildet, über die die Auflagefläche 18 des Entriegelungsstiftes 13 im Zuge der Drehbewegung des Drehelementes 19 um 180° um die Drehachse 21 abrollt. Auf der Innenseite der Exzenterfläche 20 ist ferner eine Innenkante 32 ausgebildet, so dass in der Verriegelungsposition (Fig. 4) die Auflagefläche 18 des Entriegelungsstiftes 13 weitgehend formschlüssig in die Exzenterfläche 20 greift.

Die Verbindung der Verriegelungsvorrichtung 1 mit einem Schienenverstellsystem 34 ist aus den im folgenden diskutierten Figuren 5 und 6 ersichtlich. Die Darstellung von Fig. 5 entspricht weitgehend der Darstellung von Fig. 1, wobei in Fig. 5 die Verriegelungsvorrichtung 1 an die Oberschiene 33 eines Schienenverstellsystems 34 montiert ist. Die Oberschiene 33 ist in halbtransparenter Darstellung angezeigt, um die Bauteile der Verriegelungsvorrichtung 1, die in z-Richtung unterhalb der Abstützplatte 3 angeordnet und somit von der Oberschiene 33 umschlossen sind, sichtbar zu machen.

Die Verbindung der Verriegelungsvorrichtung 1 wird im Wesentlichen durch die Abstützplatte 3 erreicht, die auf der Oberschiene 33 oberseitig aufliegt und bezüglich der Beobachtungsrichtung an der Rückseite der Oberschiene 33 in Form eines Haltewinkels anliegt. Zur Fixierung der Abstützplatte 3 an die Oberschiene 33 ist zumindest ein Fixier- oder Rastmittel 35 vorgesehen. Weiterhin ist der Knautschblock 29 kantenseitig mit der Oberschiene 33 verbunden. Ferner ist als Haltemittel ein Haltewinkel 36 mit einer seitlichen Bohrung 37 ausgebildet, an dem das Drehelement 19 drehbar gelagert ist. Hierzu greift der hohlzylindrische Fortsatz 24 des Drehelementes 19 in die Bohrung 37 ein. Der Haltewinkel 36 ist oberseitig über einen Klemmknopf oder Niet 38 an der Oberschiene 33 gesichert, wobei der Klemmknopf 38 eine weitere Bohrung 39 im Haltewinkel 36 und eine korrespondierende Bohrung 40 in der Oberschiene 33 durchgreift. Der Haltewinkel 36 übersetzt somit die seitliche Abstützung der Anlenkwelle 22 von dem Drehelement 19 auf dem Klemmknopf 38. Eine unmittelbare Lagerung des Drehelementes 19 an der Oberschiene 33 ist dagegen aus konstruktiven Gründen hinsichtlich der Schienenverschiebbarkeit nicht möglich, da dies eine Bohrung im Seitenbereich der Oberschiene 33 erforderlich machen würde.

In Fig. 6 ist die kompakte Anordnung der Verriegelungsvorrichtung 1 und die partielle Integration der Verriegelungsvorrichtung 1 in das Schienenverstellsystem 34 ersichtlicht. Sichtbar sind die Oberschiene 33, hier intransparent dargestellt, sowie die ortsfest montierbare Unterschiene 41, die bezüglich der yz-Ebene die Oberschiene in Form eines Haltewinkels umgreift. Mit Ausnahme der Unterschiene 41 sind alle sichtbaren Teile mit der Oberschiene 33 in x-Richtung gegen die Unterschiene 41 verschiebbar.

Fig. 6 zeigt einen Verriegelungszustand an, bei welchem lediglich zwei der drei Verriegelungsbolzen 2 in verriegelter Position stehen. Hierbei ist das Hebelelement 7 auf die Anstützplatte 3 abgesenkt. Bedingt durch den Lochabstand des Lochrasters der Rastöffnungen in der Unterschiene 41, der von dem Abstand der Verriegelungsbolzen 2 in der x-Richtung abweichend ist, ist einer der drei Verriegelungsbolzen 2 nicht vollständig in die verriegelte Position abgesenkt.

Das Hebelelement 7 weist bezüglich der Schwenkachse 11 gegenüberseitig der gabelförmigen Fortsätze 8 eine Lasche 42 auf, die sich im entriegelten Zustand der Verriegelungsvorrichtung 1 in der xz-Ebene gegen den an der Oberschiene 33 anliegenden rückseitigen Plattenabschnitt 43 der Abstützplatte 3 abstützt. Die Lasche 42 hat keine Kraftübertragungsfunktion zum Zwecke der Ent- und/oder Verriegelung der Verriegelungsvorrichtung 1 und ist dementsprechend schmal ausgebildet.

Die Oberschiene 33 ist weiterhin mit einer innenseitigen Bohrung 44 versehen, durch welche die Anlenkwelle 22 hindurch geführt ist. Zur partiellen lateralen Abstützung der Anlenkwelle 22 ist ein hohlzylindrisches Scheibenrad 45 ausgebildet, welches die Anlenkwelle 22 formschlüssig umschließt und welches in der innenseitigen Bohrung 44 drehbar gelagert ist.

Bezugszeichenliste
- 1: Verriegelungsvorrichtung
- 2: Verriegelungsbolzen
- 3: Abstützplatte
- 4: Bohrung
- 5: Federelement
- 6: Nut
- 7: Hebelelement
- 8: gabelförmige Fortsätze
- 9: Schwenkstift
- 9a: Schraubenspiralfeder
- 10: Flächenelement
- 11: Schwenkachse
- 12: Stellfläche
- 13: Entriegelungsstift
- 14: Schablone
- 15: Ausnehmung
- 16: Randfläche
- 17: Bohrung
- 18: Auflagefläche
- 19: Drehelement
- 20: Exzenterfläche
- 21: Drehachse
- 22: Anlenkwelle
- 23: Steckring
- 24: hohlzylindrischer Fortsatz
- 25: Ringelement
- 26: Seilzug
- 27: Klemmlasche
- 28: Endseite des Seilzugs
- 29: Knautschblock

- 30: Bohrung
- 31: Abkröpfung der Exzenterfläche
- 32: Innenkante der Exzenterfläche
- 33: Oberschiene
- 34: Schieneverstellsystem
- 35: Fixier-/Rastmittel
- 36: Haltewinkel
- 37: seitliche Bohrung
- 38: Klemmknopf
- 39: Bohrung im Haltewinkel
- 40: Bohrung in der Oberschiene
- 41: Unterschiene
- 42: Lasche
- 43: Plattenabschnitt
- 44: Bohrung in der Oberschiene
- 45: hohlzylindrisches Scheibenrad

## Patentansprüche

1. Verriegelungsvorrichtung (1) für ein Schienenverstellsystem (34) eines Fahrzeugsitzes, mit einer Anzahl von Verriegelungsbolzen (2), und mit einem um eine Schwenkachse (11) schwenkbaren Hebelelement (7) zur Entriegelung der Verriegelungsbolzen (2), wobei die Verriegelungsbolzen (2) durch eine Krafteinwirkung auf eine Stellfläche (12) des Hebelelements (7) in Entriegelungsrichtung (z) entriegelbar sind,
**dadurch gekennzeichnet,**
**dass** ein auf die Stellfläche (12) des Hebelelements (7) wirkender Entriegelungsstift (13) von einer Exzenterfläche (20) in Entriegelungsrichtung (z) des Verriegelungsbolzens (2) betätigbar ist.

2. Verriegelungsvorrichtung (1) nach Anspruch 1,
**dadurch gekennzeichnet, dass**
der Entriegelungsstift (13) zwischen der Exzenterfläche (20) und der dieser gegenübertiegenden Stellfläche (12) eingesetzt ist.

3. Verriegelungsvorrichtung (1) nach Anspruch 1 oder 2,
**dadurch gekennzeichnet,**
**dass** die Stellfläche (12) von einer Schablone (14) zur endseitigen Führung des Entriegelungsstiftes (13) eingefasst ist.

4. Verriegelungsvorrichtung (1) nach einem der Ansprüche 1 bis 3,
**dadurch gekennzeichnet,**
- **dass** die Exzenterfläche (20) an einem Drehelement (19) ausgebildet ist, und
- **dass** der Entriegelungsstift (13) durch eine Drehbewegung des Drehelementes (19) von der Exzenterfläche (20) betätigbar ist.

5. Verriegelungsvorrichtung (1) nach Anspruch 4,
**dadurch gekennzeichnet,**
**dass** das Drehelement (19) endseitig mit einer horizontal und orthogonal zur Schwenkachse (11) angeordneten Anlenkwelle (22) verbunden ist.

6. Verriegelungsvorrichtung (1) nach Anspruch 5,
**dadurch gekennzeichnet,**
**dass** das Drehelement (19) zur Stabilisierung der Anlenkwelle (22) drehbar an einem mit dem Schienenverstellsystem (34) verbundenen Haltewinkel (36) gelagert ist.

7. Verriegelungsvorrichtung (1) nach einem der vorherigen Ansprüche,
**gekennzeichnet durch**
eine Abstützplatte (3), an welche das Hebelelement (7) schwenkbar angelenkt ist, und welche Bohrungen (4,17) für jeden Verriegelungsbolzen (2) und für den Entriegelungsstift (13) aufweist.

8. Schienenverstellsystem (34), umfassend eine mit einem Fahrzeugsitz (46) verbindbare Oberschiene (33), eine ortsfest montierbare Unterschiene (41), eine Anlenkwelle (22) zur Betätigung der Exzenterfläche (20) und eine Verriegelungsvorrichtung (1) nach einem der Ansprüche 1 bis 7.

9. Schienenverstellsystem (34) nach Anspruch 8,
- wobei die Verriegelungsvorrichtung (1) mit der Oberschiene (33) fest verbunden ist, und
- wobei die Verriegelungsbolzen (2) zum Eingriff in dazu ausgebildete Bohrungen in der Unterschiene (41) vorgesehen sind.

10. Schienenverstellsystem (34) nach Anspruch 8 oder 9,
wobei die Anlenkwelle (22) von einem Ringelement (25) zur Anbindung an ein Betätigungselement eingefasst ist, insbesondere mittels eines mit dem Ringelement (25) peripher verbundenen Seilzugs (26).

11. Fahrzeugsitz, gelagert auf einem Schienenverstellsystem (34) nach einem der Ansprüche 8 bis 10.

## Claims

1. Locking device (1) for a rail adjustment system (34) of a vehicle seat, with a number of locking bolts (2), and with a lever element (7), which is pivotable about a pivot axis (11), for unlocking the locking bolts (2), wherein the locking bolts (2) can be unlocked by an application of force to an adjusting surface (12) of the lever element (7) in the unlocking direction (z), **characterized in that** an unlocking pin (13) which acts on the adjusting surface (12) of the lever element (7) can be actuated in the unlocking direction (z) of the locking bolt (2) by an eccentric surface (20).

2. Locking device (1) according to Claim 1, **characterized in that** the unlocking pin (13) is inserted between the eccentric surface (20) and the adjusting surface (12) lying opposite the latter.

3. Locking device (1) according to Claim 1 or 2, **characterized in that** the adjusting surface (12) is enclosed by a template (14) for the end-side guidance of the unlocking pin (13).

4. Locking device (1) according to one of Claims 1 to 3, **characterized**
- **in that** the eccentric surface (20) is formed on a rotational element (19), and
- **in that** the unlocking pin (13) can be actuated by the eccentric surface (20) by means of a rotational movement of the rotational element (19).

5. Locking device (1) according to Claim 4, **characterized in that** the rotational element (19) is connected on the end side to an articulation shaft (22) arranged horizontally and orthogonally with respect to the pivot axis (11).

6. Locking device (1) according to Claim 5, **characterized in that**, in order to stabilize the articulation shaft (22), the rotational element (19) is mounted rotatably on a retaining bracket (36) connected to the rail adjustment system (34).

7. Locking device (1) according to one of the preceding claims, **characterized by** a supporting plate (3) to which the lever element (7) is pivotably coupled and which has bores (4, 17) for each locking bolt (2) and for the unlocking pin (13).

8. Rail adjustment system (34) comprising an upper rail (33) which can be connected to a vehicle seat (46), a lower rail (41) which can be mounted in a positionally fixed manner, an articulation shaft (22) for actuating the eccentric surface (20) and a locking device (1) according to one of Claims 1 to 7.

9. Rail adjustment system (34) according to Claim 8,
- wherein the locking device (1) is connected fixedly to the upper rail (33), and
- wherein the locking bolts (2) are provided for engagement in bores, formed for this purpose, in the lower rail (41).

10. Rail adjustment system (34) according to Claim 8 or 9, wherein the articulation shaft (22) is enclosed by a ring element (25) for connection to an actuating element, in particular by means of a cable pull (26) peripherally connected to the ring element (25).

11. Vehicle seat mounted on a rail adjustment system (34) according to one of Claims 8 to 10.

## Revendications

1. Dispositif de verrouillage (1) pour un système de réglage de rails (34) d'un siège de véhicule, comprenant une pluralité de boulons de verrouillage (2), et un élément de levier (7) pouvant pivoter autour d'un axe de pivotement (11) pour le déverrouillage des boulons de verrouillage (2), les boulons de verrouillage (2) pouvant être déverrouillés par l'action d'une force sur une surface de commande (12) de l'élément de levier (7) dans la direction de déverrouillage (z),
**caractérisé en ce**
**qu'**une goupille de déverrouillage (13) agissant sur la surface de commande (12) de l'élément de levier (7) peut être actionnée par une surface excentrique (20) dans la direction de déverrouillage (z) du boulon de verrouillage (2).

2. Dispositif de verrouillage (1) selon la revendication 1,
**caractérisé en ce que**
la goupille de déverrouillage (13) est insérée entre la surface excentrique (20) et la surface de commande (12) opposée à celle-ci.

3. Dispositif de verrouillage (1) selon la revendication 1 ou 2,
**caractérisé en ce que**
la surface de commande (12) est encadrée par un gabarit (14) pour le guidage unilatéral de la goupille de déverrouillage (13).

4. Dispositif de verrouillage (1) selon l'une quelconque des revendications 1 à 3,
**caractérisé en ce que**
la surface excentrique (20) est réalisée sur un élément rotatif (19) et
la goupille de déverrouillage (13) peut être actionnée par la surface excentrique (20) par un mouvement de rotation de l'élément rotatif (19).

5. Dispositif de verrouillage (1) selon la revendication 4,
**caractérisé en ce que**
l'élément rotatif (19) est connecté du côté de son extrémité à un arbre d'articulation (22) disposé horizontalement et perpendiculairement à l'axe de pivotement (11).

6. Dispositif de verrouillage (1) selon la revendication 5,
**caractérisé en ce que**
l'élément rotatif (19) est monté pour stabiliser l'arbre d'articulation (22) de manière rotative sur un coude de retenue (36) connecté au système de réglage de rails (34).

7. Dispositif de verrouillage (1) selon l'une quelconque des revendications précédentes,
**caractérisé par**
une plaque d'appui (3) sur laquelle est articulée de manière pivotante l'élément de levier (7), et qui présente des alésages (4, 17) pour chaque boulon de verrouillage (2) et pour la goupille de déverrouillage (13).

8. Système de réglage de rails (34), comprenant un rail supérieur (33) pouvant être connecté à un siège de véhicule (46), un rail inférieur (41) pouvant être monté de manière fixe, un arbre d'articulation (22) pour l'actionnement de la surface excentrique (20) et un dispositif de verrouillage (1) selon l'une quelconque des revendications 1 à 7.

9. Système de réglage de rails (34) selon la revendication 8,
dans lequel le dispositif de verrouillage (1) est connecté fixement au rail supérieur (33), et
dans lequel les boulons de verrouillage (2) sont prévus pour s'engager dans des alésages prévus à cet effet dans le rail inférieur (41).

10. Système de réglage de rails (34) selon la revendication 8 ou 9,
dans lequel l'arbre d'articulation (22) est encadré par un élément annulaire (25), pour le raccordement à un élément d'actionnement, en particulier au moyen d'un câble Bowden (26) connecté à la périphérie de l'élément annulaire (25).

11. Siège de véhicule, monté sur un système de réglage de rails (34) selon l'une quelconque des revendications 8 à 10.
